# EUROPEAN PATENT APPLICATION

(11) **EP 3 239 229 A1**
(43) Date of publication of application: **01.11.2017**
(21) Application number: 17167885.7
(22) Date of filing: 25.04.2017
(51) Int. Cl.: C08K 9/12, C09K 21/02, C09K 21/06, C08K 5/00

(54) **FLAME RETARDANT COMPOSITION AND PROCESS FOR PREPARATION THEREOF**

(30) Priority: 28.04.2016 IN 201621014889
(71) Applicant: Infingent AB, 205 12 Malmö (SE)
(72) Inventor: ATLURI, Rambabu, 522234 Nadendla Mandal/Village (IN)
(74) Representative: Gallafent, Antony Xavier

(57) **Abstract**

The present disclosure relates to a flame retardant composition and a process for preparing the flame retardant composition by using a porous substrate. The present disclosure further relates to a process for preparing the porous substrate.

## Description

### FIELD

The present disclosure relates to a flame retardant composition and a process for preparation thereof.

### BACKGROUND

Natural and synthetic plastic materials are used for many applications/products. Fire hazards associated with the utilization of these plastic materials are of particular concern for many private and government bodies. Therefore, flame retardant chemicals are added as fillers to the products to reduce the chances of fire and to delay the spread of fire once it starts.

The choice of flame retardant in consumer products is largely dependent on the desired physical, chemical, and electrical properties of the final insulation material, which are determined by the polymer, the fire safety regulations, and the applicable standards.

Recently it has been observed that the most common cause of death is due to fire gas or smoke. Many Environmental Protection Agencies (EPAs) worldwide have started to regulate several flame retardants (FRs) and ban conventional FRs due to their inability to prevent and/or contain fire. Therefore, the need for replacing conventional FRs is huge. There are a few points to be considered, when new flame retardants (FRs) are replaced with conventional FRs, which are as given below:
1) High performance as per the application, i.e., reduced processing difficulties and excellent flame retardant properties;
2) Pass the test standards and regulations, i.e., produce comparatively less or preferably no fire gasses; and
3) Price efficient and scalable production.

To obtain a better flame retardant, emphasis is laid on using nano-fillers as flame retardant additives. Examples of nano-fillers include layered silicates, carbon nanotubes, and metal oxide particles. Layered silicates or nano-clays in a polymer matrix create a protective layer during combustion. The accumulation of clay on the surface of a material acts as an insulator and protects the underlying material from the heat flux of the flame. It has been reported that the incorporation of nano-clays into polymer matrices leads to reduced burning rate of pure polymers, but there is no significant fire retardancy. Furthermore, it is suggested that the combination of nano-clays and flame retardants does not exhibit remarkable additional influence on the fire retardant property.

Carbon nanotubes (CNTs) may be an alternative in place of classical FRs. Several factors influence the flame retardant properties of polymer nano-composites such as nanotube dispersions, loading rate and aspect ratio of nanotubes. However, it is observed that the incorporation of nano-clays (Carbon nanotubes (CNTs) into the polymer resulted in increased flammability of the polymer nano-composite. Above all, the environmental impact of releasing CNTs remains unknown.

Metal oxide particles, in particular nano-particles such as titanium oxide, ferric oxide, aluminum oxide, antimony oxide, silica, silsesquioxane, and the like have been used as reinforcing fillers for polymeric materials. In general, incorporation of nanofillers decreases polymer flammability; however, the polymer nanocomposite burns completely, and does not improve the formation of char. Several other factors limit the use of nanofillers as FRs such as cost, loading levels, particle size, and surface functionality, etc. and hence limit their commercial application. The challenge, therefore, is to optimize the use of flame retardant chemicals to achieve a cost-effective and eco-friendly flame retardant end-use product without seriously compromising the product's mechanical/physical properties.

US20110288210 discloses a polymer composition comprising a polymer and an effective amount of mesoporous silicate as a flame retardant additive. For creating the mesoporous silicate with high porosity, there is a need to use toxic surfactants as pore-forming agents such as cationic, anionic, polymers, and zwitterionic surfactants. Further, removal of the surfactants may lead to release of toxic gases during the calcination/combustion step. Therefore, the scalability of a process using mesoporous silicates is a concern.

Therefore, there is felt a need for replacing conventional fire retardants with environmentally friendly fire retardants possessing excellent flame retardant properties, producing negligible or no fire gasses as byproducts, and scalable efficient production.

### OBJECTS

Some of the objects of the present disclosure, which at least one embodiment herein satisfies, are as follows.

It is an object of the present disclosure to ameliorate one or more problems of the prior art or to at least provide a useful alternative.

An object of the present disclosure is to provide a flame retardant composition having improved thermal resistance and flame retardant rating.

Another object of the present disclosure is to provide an efficient and scalable process for the preparation of a flame retardant composition.

Still another object of the present disclosure is to provide an environmentally friendly process for preparing a flame retardant composition.

Other objects and advantages of the present disclosure will be more apparent from the following description, which is not intended to limit the scope of the present disclosure.

### SUMMARY

The present disclosure relates to a flame retardant composition comprising at least one flame retardant filler and a porous substrate being characterized by a porosity in the range of 30% to 95%, surface area in the range of 10 m²/g to 1500 m²/g, and tapped density in the range of 0.05 g/m³ to 1.0 g/m³. The porous substrate comprises at least one of a polyphenol and a flame retardant filler and a metal oxide precursor. The flame retardant filler(s) can be independently selected from the group consisting of mineral flame retardant filler, phosphorus-based flame retardant filler, nitrogen-based flame retardant filler, and silicone filler.

The process for preparing a flame retardant composition involves the step of forming a porous substrate which involves the step of dissolving at least one of a polyphenol and a flame retardant filler in at least one fluid medium under stirring at a speed in the range of 100 rpm to 1000 rpm and at a temperature in the range of 5 °C to 50 °C, for a time period in the range of 2 hours to 8 hours to obtain a first solution. The so obtained first solution is mixed with at least one metal oxide precursor under stirring at a speed in the range of 100 rpm to 1000 rpm and at a temperature in the range of 5 °C to 50 °C for a time period in the range of 2 hours to 8 hours to obtain a second solution. The second solution is maintained under stirring for a time period in the range of 2 hours to 8 hours to obtain a precipitate. The so obtained precipitate may be separated to obtain a solid. The solid is washed with water, followed by further washing with an acid solution to obtain a washed precipitate. In some cases, acid wash may not be required, a simple washing with water ideally removes significant amount of polyphenols. The so obtained precipitate is dried to obtain a free flowing powder of the porous substrate. The so obtained free flowing powder of porous substrate is dissolved with at least one solvent selected from the group consisting of non-polar solvents such as toluene, n-hexane, and polar solvents such as ethanol, methanol to obtain a solution. The so obtained solution is added to at least one flame retardant filler, under stirring, at a speed in the range of 400 rpm to 1000 rpm, at a temperature in the range of 5 °C to 150 °C, for a time period in the range of 1 hour to 24 hours to obtain a precipitate.

The so obtained precipitate can remain in solution as suspension of particles or separated by filtration to obtain wet cake. The wet cake may be washed followed by drying to obtain a free flowing powder of the flame retardant composition.

The metal oxide precursor in the present disclosure comprises at least one of coupling agent and an inorganic precursor. The acid may be selected from a group consisting of weak acid and a strong acid, and the concentration of the acid solution varies between 0.1M and 1M.

### BRIEF DESCRIPTION OF THE ACCOMPANYING DRAWING

The porous substrate of the present disclosure will now be described with the help of the accompanying drawing, in which:
Figure 1 illustrates an SEM image of a porous silica substrate as disclosed in example 1b;
Figure 2 illustrates an SEM image of a porous silica substrate as disclosed in example 1c; and
Figure 3 illustrates an SEM image of a porous silica substrate as disclosed in example 1e.

### DETAILED DESCRIPTION

Porous substrates in combination with flame retardant fillers are of great interest for flame retardant compositions because of their excellent thermal resistance, non-toxicity, and absence of fire gasses during combustion.

The present disclosure envisages a flame retardant composition and an efficient and scalable process for preparing a flame retardant composition.

In one aspect of the present disclosure there is provided a flame retardant composition comprising at least one flame retardant filler and a porous substrate.

The ratio of the amount of porous substrate and flame retardant filler is in the range of 10 to 1.

The porous substrate used in the present disclosure comprises at least one of a polyphenol and a flame retardant filler, and a metal oxide precursor. The porous substrate of the present disclosure is characterized by porosity in the range of 30 % to 95 %, surface area in the range of 10 m²/g to 1500 m²/g, and tapped density in the range of 0.05 g/m³ to 1.0 g/m³.

The polyphenol can be derived from plants. The polyphenol can be selected from the group consisting of proanthocyanidins or condensed tannins such as procyanidins, prodelphinidins, and profisetinidins; gallo- and ellagitannins (hydrolyzable tannins) such as tannic acid, theaflavin-3-gallate, ellagitannin, gallotannin, and phlorotannins such as fucophlorethols, fucotriphlorethol.

The use of polyphenols in the present disclosure may overcome the problems associated with the existing flame retardant fillers based on porous substrates or mesoporous silicates. Conventionally, for creating high porosity substrates, there is a need to use toxic surfactants as pore-forming agents such as cationic, anionic, polymers and zwitterionic surfactants. However, use plant-derived polyphenols as a pore-forming agent is advantageous as the plant derived polyphenols create desirable pore properties as well as fire retardant properties.

Further, removal of the pore-forming agents such as surfactants may lead to release of toxic gases during calcination/combustion step; however, polyphenols may be easily removed from the substrate by introducing a washing step with water or a simple chemical treatment. In some cases, it is not necessary to remove polyphenols from the pore as they itself act as flame retardant fillers. The scalability of porous substrates or mesoporous silicates is therefore a concern. On the contrary, the plant derived polyphenols ideally solves such aforementioned issues as the process for preparation of flame retardant composition is robust, stable and does not depend on process conditions such as pH, temperature, and type of solvents.

The flame retardant filler can be independently selected from the group consisting of flame retardant agents that function as intumescent flame retardant agents (e.g., ammonium polyphosphates, melamine, melamine phosphates), materials that act as diluents or the combustible gasses (e.g., potassium carbonate), or smoke suppressants (e.g., magnesium hydroxide). Other suitable fillers include flame retardant agents selected from the group consisting of organophosphates, antimony oxide, red phosphorous, and brominated hydrocarbons though these are less preferred due to toxicity or environmental concerns.

The flame retardant fillers may also selected from the group consisting of aluminum hydroxide (also in the form of aluminum trihydrate (ATH), aluminum tri hydroxide and in the mineral gibbsite or the ore bauxite), magnesium carbonate, magnesium oxide, magnesium hydroxide, hydromagnesite, hunite [Mg₃Ca(CO₃)₄], hydrotal cite and like mixed magnesium-aluminum hydroxides With layered lattice structures, boehnite, bentonite, montmorillonite, hectorite, and halloysite nano-clays, phosphates (e.g., Zinc phosphates silane phosphates), borates (e.g., Zinc borates), stannates and hydroxystannates (e.g., Zinc stannates and hydrostannates), Zinc oxide, Zinc sulphides and molybdates (e.g., ammonium molybdates), particularly in combination with magnesium or aluminum hydroxides and the mesoporous silicate. The flame retardant filler may also be selected from the group that includes but is not limited to organophosphoros alkoxysilane and melamine based flame retardants. Organophosphorus alkoxysilanes can be selected from the group consisting of diethylphosphatoethyl triethoxysilane and diethylphosphatoethyltriethoxysilane and melamine based flame retardants can be selected from the group consisting of melamine cyanurate and melamine polyphosphate.

The metal oxide precursor comprises at least one of a coupling agent and an inorganic precursor.

The coupling agent can be at least one selected from the group consisting of alkoxysilanes, alkoxy titanates, and alkoxy zirconates. In an exemplary embodiment the coupling agent is 3-aminopropyl triethoxysilane, 3-aminopropyl triethoxysilane and 3-mercaptopropyltriethoxysilane.

The inorganic precursor can be at least one selected from metal alkoxides of the general formula M (OR)ₓ and alkali metal metasilicates with the general formula N₂SiO₃.

In metal alkoxides having the general formula M(OR)ₓ, M is a metal selected from the group consisting of Si, Al, Ti, Cu, Co, Zr, Fe, and Ni; R is an alkyl group having carbon atoms in the range of 1 to 20; and x is an integer in the range of 1 to 4. In an exemplary embodiment, the metal alkoxide is selected from the group consisting of titanium isopropoxide and tetraethoxysilane.

In alkali metal metasilicates having the general formula N₂SiO₃, N is a metal selected from the group consisting of Li, Na, and K. In an exemplary embodiment the alkali metal metasilicate is sodium silicate.

The molar ratio of the metal oxide precursor and the polyphenol is in the range of 1:10 and 1:500, preferably 1:10 and 1:100. In an embodiment, the polyphenols and flame retardant fillers act as pore forming agents.

In another aspect of the present disclosure there is provided a process for preparing a flame retardant composition.

The process for preparing a flame retardant composition comprises forming a porous substrate followed by dissolving the porous substrate in at least one fluid medium to obtain a solution and adding at least one flame retardant filler to the solution under stirring at a speed in the range of 400 rpm to 1000 rpm, at a temperature in the range of 5 °C to 150 °C, for a time period in the range of 1 hour to 24 hours to obtain a precipitate. The precipitate is separated followed by washing and drying to obtain the flame retardant composition. The flame retardant composition can be in the form of a free flowing powder or solution.

The porous substrate solution is obtained by mixing a porous substrate in at least one fluid medium which is selected from the group consisting of non-polar solvents such as toluene, n-hexane and polar solvents such as ethanol, methanol and the like. The porous substrate comprises a metal oxide precursor and at least one of a polyphenol and a flame retardant filler.

In an exemplary embodiment, the flame retardant composition is particularly based on a silica based porous substrate. The silica based porous substrate enhances the thermal, mechanical, physical, and/or flame retardant properties alone or in combination with other flame retardant compositions. Combustion of silica based porous substrate, in a polyphenol composite affects its thermal stability, while the filler in the pores reduces the heat released. Additionally, filling the porous substrate with other flame retardant fillers in the porous substrate reduces the release of fire gasses during a fire.

In one embodiment, the porous substrate containing a polyphenol may be used as a pore-forming agent. The polyphenols have the characteristics of fire insulation and high synergic to use as flame retardant composition.

The combination of the properties of a porous substrate and a flame retardant filler within a single material is commercially attractive because of the possibility of combining the enormous functional variation of flame retardant chemistry with the advantages of a thermally stable and robust inorganic substrate. This is particularly applicable to flame retardant products. The interaction of a flame retardant filler and an inorganic substrate can lead to materials whose properties differ considerably from those of their individual, isolated components.

To render the desired flame retardant properties to the flame retardant composition, methods were developed where interaction of both the filler and the porous substrate is obtained without inhibiting the flame retardant properties. Two methods may be used in the preparation of the flame retardant composition such as post-pore method and pre-pore method.

The post-pore method refers to the subsequent filling of inner pores of the porous substrate with flame retardant fillers. The method has an advantage of carrying enough amounts of flame retardant filler and reduces the leaking of the filler into the environment. The insulation property of the porous substrate acts as a protection layer to the product while the filler in the pore acts as an inhibitor of fire or fire related gases.

The pre-pore method refers to the use of flame retardant fillers as pore forming agents. The advantage of applying the pre-pore method is that it is a one-step process instead of the two stages that are required in the post-pore method. Another advantage of this method is that it can combine different flame retardant properties by combining flame retardant fillers and subsequent polymerization of metal oxide precursor.

The selection of method for preparing a flame retardant composition depends on several factors, including the type of application, type of filler, and cost. In addition, the flame retardant made by the pre-pore method may be available either in solution or solid form while the post-pore method can only give solid form of the flame retardant composition. In one embodiment of the present disclosure, post-pore method was employed for preparing the flame retardant composition for plastic material. In another embodiment pre-pore method was employed for preparing flame retardant composition for fabrics.

The details of the post-pore method and pre-pore method are given below:

### Post-pore method:

In the post-pore method, the process for preparing a flame retardant composition comprises mixing a porous substrate solution with at least one flame retardant filler at a speed in the range of 100 rpm to 1000 rpm (revolutions per minute), preferably 400 rpm to 800 rpm at a temperature in the range of 5 °C to 50 °C, preferably 22 °C to 40 °C for a period of time in the range of 1 to 24 hours, preferably 8 to 15 hours to obtain a precipitated solid. The precipitated solid is separated from the solution by simple filtration using Buchner funnel under reduced pressure and is dried in an oven at a temperature in the range of 30 °C to 50 °C (40 °C) for a period of time in the range of 8 hours to 12 hours to obtain a flame retardant composition.

The porous substrate solution is a mixture of a porous substrate and a solvent, and optionally comprising a hydrophobic agent and a catalyst. The addition of a hydrophobic agent and a catalyst depends on the type of filler and application of the flame retardant composition. In one embodiment, the porous substrate comprises at least one polyphenol and at least one metal oxide precursor.

The hydrophobic agent can be selected from the group consisting of organosilicon compounds comprising of alkoxy silanes, silazanes, and silylating agents. Examples of alkoxy silanes include methyltrimethoxysilane, mimethyldimethoxysilane, phenyltrimethoxysilane, methyltriethoxysilane, dimethyldiethoxysilane, Phenyltriethoxysilane, n-Propyltrimethoxysilane, n-Propyltriethoxysilane, hexyltrimethoxysilane, hexyltriethoxysilane, octyltriethoxysilane, decyltrimethoxysilane, 1,6-Bis(trimethoxysilyl) hexane, Hexamethyldisilazane and Siloxane with hydrolyzable groups. Examples of silylating agents include trimethylsilyl chloride, dimethyloctadecylchlorosilane, vtrimethylsilyl trifluromethanesulfonate, triethylsilyl chloride, t-butyldimethylsilyl chloride, triisopropylsilyl chloride, 1,3-Dichloro-1,1,3,3-tetraisopropyldisiloxane, chloromethyltrimethylsilane, triethylsilane, t-butyldimethylsilane, trimethylsilylacetylene, hexamethyldisilane, allyltrimethylsilane, trimethylvinylsilane.

The catalyst added to the porous substrate solution of the present disclosure can be imidazole.

### Pre-pore method:

In the pre-pore method, the process for preparing a flame retardant composition comprises mixing at least one flame retardant filler solution and metal oxide precursor at a speed in the range of 100 rpm to 1000 rpm, preferably 400 rpm to 700 rpm at a temperature in the range of 5 °C to 50 °C, preferably 22 °C to 40 °C for a period of time in the range of 1 to 24 hours, preferably 8 to 15 hours to obtain precipitated solution. In one embodiment, the precipitated solution may be used as a flame retardant composition itself. This type of flame retardant composition is particularly helpful for making flame retardant fabrics. In another embodiment, the precipitated solids in the pre-pore method are separated from the solution by simple filtration using Buchner funnel under reduced pressure followed by drying in an oven at a temperature in of 40 °C to 60 °C for a period of time in the range of 8 hours to 12 hours.

In yet another embodiment of the pre-pore method, the flame retardant filler is encapsulated by the metal oxide. The method uses flame retardant fillers as pore forming agents.

The flame retardant filler solution comprises at least one flame retardant filler dispersed in water, water miscible fluid medium, or combination thereof. The metal oxide precursor comprises at least one coupling agent and an inorganic precursor.

In yet another aspect of the present disclosure there is provided a process for preparing a porous substrate. Conventionally, the process of preparing the porous substrate mainly relies on the precipitation method and requires acidic/basic conditions. Due to the use of acid/base compounds the process requires high cost for disposal of the chemical waste. Further, many porous substrates require organic templates as pore forming agents, which further needs to be removed by treating the material at high temperatures approximately above 500 °C, lead to release high amount of toxic gases to the environment. The removal of the organic templates can also be done via harsh chemical method, such as refluxing the solution in a strong acid solution. The former process requires high energy consumption and the later consumes a high amount of chemicals. Thus, the inventors of the present disclosure also provide a process for preparing the porous substrate which is simple and cost effective, as most of the chemicals used in the process of the present disclosure can be recycled and are environment friendly.

The process for preparing the porous substrate involves the following steps.

In the first step, at least one of a polyphenol and a flame retardant filler is dissolved homogeneously in at least one fluid medium under stirring at a speed in the range of 100 rpm 1000 rpm, at a temperature in the range of 10 °C to 50 °C for a time period in the range of 2 hours to 8 hours to obtain a first solution.

In the present disclosure, a polyphenol may be used typically having a molecular weight greater than 500 g/mol. The polyphenol which acts as a pore-forming agent contains at least 6 phenolic hydroxyl groups and is capable of forming stable metal oxide matrix in a porous substrate.

The concentration of the polyphenol, in the first solution, is in the range of 0.01 to 30% w/w, preferably 1 to 10% w/w.

The fluid medium is one or more selected from the group consisting of polar solvents such as water, acetone, methanol, ethanol, propanol, isopropanol, butanol, and combination thereof. The ratio of polyphenol and fluid medium is in the range of 0.01 to 0.3.

Ooptionally, at least one compound selected from the group consisting of hydrophobic agent, catalyst, surfactant, pore expanding agent, and inorganic salt is added to the first solution, prior to the addition of metal oxide precursor.

Other organic templates such as surfactants may be added to the porous solution as co-template to improve the rate of precipitation, morphology control and often increase the pore size. Common surfactants include cationic CTAB (Cetyl trimethylammonium bromide), non-ionic PEO (Poly(ethylene oxide)) surfactants or Pluronics.

A pore expanding agent or a swelling agent is a non-polar reagent that goes between the aromatic rings of polyphenol and expands them, thereby increasing the pore size of the final product. Common example include 1,3,5-trimethylbenzene (TMB), polypropylene oxide (PPO), n-decane, and N,N-dimethyldodecylamine.

Addition of inorganic salts may improve the rate of precipitation and indeed improve the monodispersity of the particle precipitation. Examples of salts include NaCl, KCl, NaI, and KI.

In an exemplary embodiment the polyphenol used is tannic acid and the first solution is yellowish in color.

In the second step, at least one metal oxide precursor is mixed with the so obtained first solution under stirring at a speed in the range of 100 rpm to 1000 rpm, at a temperature in the range of 10 °C to 50 °C for a period of time in the range of 2 hours to 8 hours, to obtain a second solution.

In an exemplary embodiment, the addition of the metal oxide precursor to the so obtained first solution (polyphenol solution) changes the color of the first solution to white from yellowish. The color of the second solution upon stirring for a time period in the range of 2 hours to 8 hours becomes reddish and finally to a dark brown solution from white.

The metal oxide precursor comprises at least one of a coupling agent and an inorganic precursor.

In the third step, the so obtained second solution is maintained under stirring at a speed in the range of 100 rpm to 1000 rpm for a time period in the range of 2 hours to 8 hours to obtain a precipitated solution.

Lastly, the precipitated solution can be optionally filtered by simple filtration or can be filtered using Buchner funnel under reduced pressure to obtain a solid. The so obtained solid is washed with water, followed by washing with 0.1M hydrochloric acid to obtain a washed precipitate.

The acidic solution having a concentration in the range of 0.1M to 1M can be used for washing the precipitate which can remove the unreacted polyphenol from the pores without damaging or collapsing the pore structure until the precipitate turns white in color. The volume of the acid solution required is in the range of 0.05 litre to 5 litres. In some cases, the acid wash may not be required for removing polyphenols from the pores, a simple washing with water ideally removes significant amount of polyphenols, where polyphenols dissolves well in water.

The so obtained precipitate is dried to obtain a free flowing powder of the porous substrate. The drying can be done by using air drying, spray drying, or a combination thereof. Air drying is performed at a temperature in the range of 20 °C to 80 °C and Spray drying involves spraying the solution of the porous substrate to obtain a free flowing powder. The porous substrate of the present disclosure is characterized by having at least 40 % porosity, surface area in the range of 10 m²/g to 1500 m²/g, and tapped density in the range of 0.05 g/cm³ to 1.0 g/cm³.

The yield of the resulting porous substrate is greater than 50% of the weight of metal oxide precursors.

Depending on the type of coupling agent, amount of the coupling agent and type of metal oxide precursor, the particle shape of porous substrate can be controlled and leads to monodispersed, polydispersed, aggregated, agglomerated, or combination thereof.

In an exemplary embodiment, 3-aminopropyltriethoxysilane (APS) used as a coupling agent at a molar ratio of 0.1 wt% against metal oxide precursor, leads to mono-dispersed particles of size 450 nm. On the other hand, use of sodium silicate as a metal oxide precursor, leads to aggregated particles. Likewise, use of tetraethylorthosilicate/ tetraethoxysilane (TEOS) and 3-mercaptopropyl triethoxysilane (MPS) leads to poly-dispersed particles.

The process of the present disclosure uses commonly available and inexpensive reagents. The fluid media used in the process of the present disclosure can be recycled and used further. Hence, the process of the present disclosure is simple and economical. The process described herein can be scaled up to an overall volume of solution ranging from 1 litre to 1000 litres. In an exemplary embodiment, the process was scaled up to 100 litres per single batch and the properties of the resulting porous substrate are similar to the properties of 1 litre batch synthesis.

The disclosure will now be described with reference to the accompanying experiments, which do not limit the scope and ambit of the disclosure. The description provided is purely by way of example and illustration. The laboratory scale experiments provided herein can be scaled up to industrial or commercial scale.

### EXPERIMENTAL DETAILS

### Example 1: Process for the preparation of a porous substrate.

### a): Method of making a Titania based porous substrate

In a 10L reactor vessel, tannic acid (12 g) was dissolved in 3.6 L water, under stirring, at room temperature to obtain a reaction mixture. After 6 hours of stirring, the reaction mixture became semi-transparent yellowish solution (first solution). A metal oxide precursor containing a mixture of titanium isopropoxide (63 g) and 3-aminopropyl triethoxysilane (8 g) was added under stirring at a speed of 450 rpm at 35 °C for 6 hours to the so obtained first solution. Upon addition of the precursor, the color of the second solution became white and upon stirring it became reddish and finally turned dark green. The so obtained dark green colored solution was left under stirring for 6 hours. After 6 hours the solution got precipitated and the precipitated solution was then filtered using Büchner funnel. The precipitate was washed with water, followed by hydrochloric acid solution (1M). After washing, the powder was further dried in an oven at 40 °C for 8 hours to obtain a free flowing powder of titania based porous substrate. The so obtained porous substrate had a porosity of 47 %, surface area of 290 m²/g; and tapped density of 1.0 g/cm³.

### b): Method of making a silica-based porous substrate

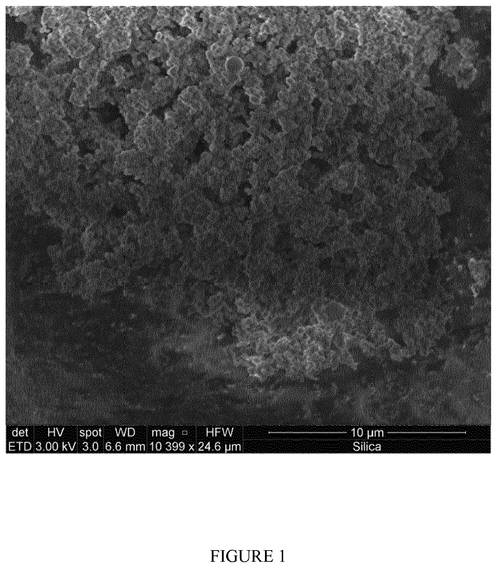

In a 10L reactor vessel, tannic acid (10 g) was dissolved in water (6 L) under stirring at room temperature to obtain a reaction mixture. After 6 hours of stirring at 600 rpm, the reaction mixture became semi-transparent yellowish solution (first solution). A metal oxide precursor containing a mixture of 80 g of tetraethoxysilane (TEOS) and 4 g of 3-aminopropyl triethoxysilane (APS) with a ratio of 1:0.05 v/v was added to the so obtained first solution. Upon addition of the precursor, the color of the solution became white and finally turned dark green. The so obtained dark green colored solution was stirred for 6 hours. After 6 hours the solution got precipitated and the precipitated solution was then filtered using Büchner funnel. The precipitate was washed with water, followed by hydrochloric acid solution (3M). After washing, the powder was further dried in an oven under 40 °C for 12 hours to obtain a free flowing powder of silica based porous substrate. The so obtained porous substrate had a porosity of 92 %, surface area of 530 m²/g and tapped density of 0.07 g/cm³. An SEM image of the porous silica substrate is illustrated in **Figure 1****.**

### c): Method of making a silica-based porous substrate

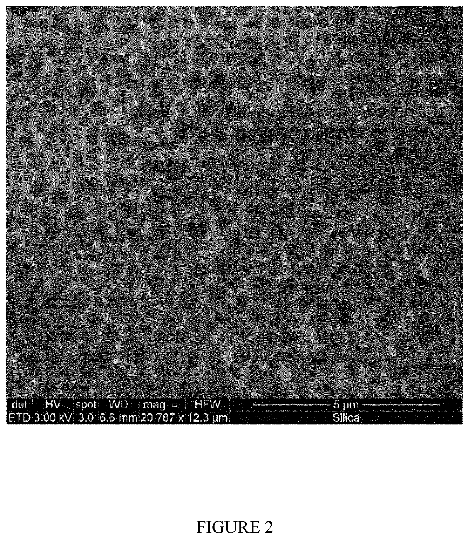

In a 10L reactor vessel, tannic acid (10 g) was dissolved in 2 L acetone under stirring at room temperature to obtain a reaction mixture. After 6 hours of stirring at 700 rpm, the reaction mixture became semi-transparent yellowish solution (first solution). A metal oxide precursor containing a mixture of 5 g of sodium silicate and 2.05 ml of water was added to the so obtained solution (second solution). Upon addition of the precursor, the color of the second solution became white and upon stirring it became reddish and finally turned to dark green. The so obtained dark green colored solution was stirred for 6 hours to obtain a precipitated solution. The precipitated solution was filtered using Büchner funnel. The precipitate was washed with water, followed by washing with an acid solution to obtain a solid. The concentration of acid solution was 0.1M of hydrochloric acid. After washing, the solid was further dried in an oven under 40 °C for 10 hours to obtain a free flowing powder of silica-based porous substrate with polydispersed spheres. The so obtained porous substrate had a porosity of 80 %, surface area of 390 m²/g and tapped density of 0.1 g/cm³. An SEM image of the porous silica substrate is illustrated in **Figure 2.** Figure 2 shows that the porous substrate particles are polydispersed, and have an average diameter of 0.7 microns.

### d): Method of making a silica-based porous substrate containing monodispersed spheres

Different samples of silica based porous substrates (CAT3-1 to CAT3-4) were prepared by varying the concentration of sodium silicate along with varying the amount of 3-aminopropyl triethoxysilane (APS) by using a process similar to experiment 1c. The results obtained are given in **Table 1.**

**Table 1: Experimental conditions and properties of silica based porous substrate particles.**

| Sample | Sodium silicate, g | APS, g | Particle size, µm | Surface Area m²/g | Porosity % |
|---|---|---|---|---|---|
| CAT3-1 | 4.2 | 0.5 | 0.45 | 390 | 47 |
| CAT3-2 | 6.5 | 0.9 | 0.72 | 470 | 62 |
| CAT3-3 | 8 | 1.5 | 1.05 | 807 | 63 |
| CAT3-4 | 15 | 1.5 | 2.5 | 1030 | 76 |

### e): Method of making silica-based porous substrate containing nanoparticles

In a 5L reactor vessel, tannic acid (4 g) was dissolved in propanol (2.5 L), under stirring (450 rpm) at room temperature to obtain a reaction mixture. After 4 hours the reaction mixture turned semi-transparent yellowish color solution (first solution). A metal oxide precursor containing a mixture of 0.8 g of tetraethoxysilane (TEOS) and 8.5 g of 3-mercaptopropyltrimethoxysilane (MPS) was then added to the so obtained solution (Second solution). The color of the second solution, on the addition of the precursors, changed to white.

The color of the second solution upon stirring for 6 hours changed to red and finally to dark green. The so obtained second solution was left under stirring for 12 hours to obtain a precipitated solution. The precipitated solution was filtered using Büchner funnel. The precipitate was washed with water, followed by hydrocholoric acid solution to obtain a solid. The concentration of the acid solution is 0.25 M. After washing, the solid was dried in an oven under 40 °C for 10 hours. The average size of the silica spheres is about 50 nanometers.

Different samples of silica based porous substrate (CAT4-1 to CAT4-4) containing nanoparticles were prepared by varying the concentration of tetraethoxysilane (TEOS) and 3-mercaptopropyltrimethoxysilane (MPS) by using the process similar to example 1e. The results obtained are given in Table 2.

**Table 2: Average particle sizes under different amounts of metal oxide precursor.**

| Sample ID | TEOS, g | MPS, g | Particle size, nm | Surface Area m²/g | Porosity % |
|---|---|---|---|---|---|
| CAT4-1 | 1 | 0.1 | 30 | 345 | 38 |
| CAT4-2 | 4 | 0.35 | 50 | 492 | 47 |
| CAT4-3 | 8.5 | 0.80 | 80 | 590 | 60 |
| CAT4-4 | 8.5 | 1.50 | 120 | 510 | 72 |

As shown in Table 1 and Table 2, silica particles of different size ranging from nanometer to micro meter were prepared by hydrolysis of silica precursors in the presence of a coupling agent.

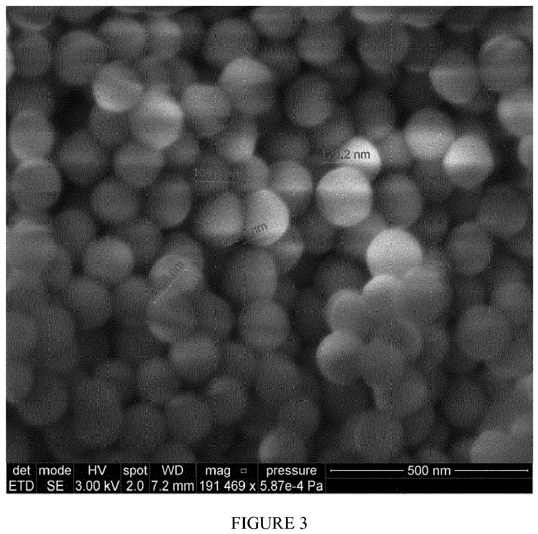

By using MPS as a coupling agent, monodispersed silica nanoparticles were prepared with a particle size ranging from 30 to 120 nanometers. Figure 3 illustrates an SEM image of the porous silica substrate (CAT4-4) prepared from TEOS/MPS ratio of 5.7. The porous silica substrate has monodispersed particles having an average diameter of 120 nm. These particles were characterized by high porosity in the mesoscale and pore size distributions controllable in the range of 3-12 nanometers. The pores in the silica matrix can be filled with flame retardant fillers for high synergistic effect. The silica nanoparticles are monodispersed. The dispersion properties of the particles can be further improved by modifying their surface chemistry. This leads to improving the dispersion of particles in the silica/polymer composite and often leads to the use of reduced amounts of flame retardant composition.

The size of the silica particles was found to increase with APS, leading to micron size spheres of size ranging from 0.2 to 2.5 micrometers (µm).

### Example 2: Process for the preparation of a flame retardant composition

### a) Process for preparing a flame retardant composition in powder form:

The porous substrate prepared in Example 1b was used in the preparation of flame retardant composition.

In a 10 L reaction vessel, 83 g of porous silica substrate was mixed with 5L of toluene. The temperature of the vessel was increased to 50 °C while stirring the solution at a speed of 600 rpm. After a homogeneous suspension of particles was obtained, 29 g of Imidazole was added and the solution was further stirred for 30 min. To the so obtained solution, 64 ml of trimethylchlorosilane (as an hydrophobic agent to coat porous substrate) was added followed by heating the reaction mixture at 120 °C for 7 hours under continuous stirring. Finally, 80 g of melamine was added to the reaction mixture and stirring was continued for another 6 hours. The solution was then filtered using Buchner funnel and the wet powder was collected without a wash. The wet sample was then further dried at 80 °C for 8 hours to obtain free flowing powder of flame retardant composition.

### Experimental study of the flame retardant composition of the present disclosure

The flame retardancy of the flame retardant composition in powder form was tested by making a composite. The composite comprised Polypropylene (PP) copolymer, melamine-silica flame retardant, and Decabromodiphenyl Ethane. Extrusion method was employed for making the samples with a thickness of 1.6 mm. Plastics flammability standard released by Underwriters Laboratories (UL-94) was used to measure the flammability of the samples. The standard classifies plastics based on the flammability of plastics in various orientations and thicknesses. The ratings are provided as V0, V1 and V2 wherein
▪ V-0- Vertical Burn; Burning stops within 10 seconds, NO flaming drips are allowed (least flame retardant)
▪ V-1 Vertical Burn; Burning stops within 60 seconds, NO flaming drips are allowed; and
▪ V-2 Vertical Burn; Burning stops within 60 seconds, Flaming drips are allowed (most flame retardant)

Experimental study of flame retardancy of four samples (FR-1 to FR-4) were carried out with varying amounts of melamine-silica (0.5, 2, 7 and 10%), which is given in **Table 3** (FR-1 to FR-4). The mechanical properties of the samples were also measured.

**Table 3: Flame retardant properties of PP copolymer**

| | Reference | FR-1 | FR-2 | FR-3 | FR-4 |
|---|---|---|---|---|---|
| PP copolymer, % | 78.0 | 77.5 | 76.0 | 71.0 | 68.0 |
| Decabromodiphenyl Ethane, % | 22.0 | 22.0 | 22.0 | 22.0 | 22.0 |
| Melamine-Silica, % | - | 0.5 | 2 | 7 | 10 |
| UL-94V Rating | Fail | V2 | V0 | V0 | V0 |
| After flame time, Sec | 30 | 30 | 10 | 10 | 10 |
| Burning drip | Yes | Yes | No | No | No |
| Burn to clamp | Yes | No | No | No | No |
| Tensile strength, MPa | 32 | 35 | 38 | 40 | 41 |
| Tensile modulus, GPa | 1.89 | 1.95 | 2.21 | 2.3 | 2.23 |

The PP co-polymer flame retardant compositions obtained in Example 2, utilizing melamine-silica particles as filler, exhibit substantial improvements in the flaming combustion, i.e., after flame time, the dripping flame particles that ignite the cotton, and the burning behaviour, i.e., burn to clamp. Moreover, the PP co-polymer compositions of Example 2 showed improved mechanical properties including tensile strength and tensile modulus in comparison to the reference polymer.

The results (Table 3) show that the flame retardant properties of the PP co-polymer composites increased to flame retardant rating V0, i.e., the samples (FR-2, FR-3, and FR-4) do not burn with flame combustion for more than 10 seconds. In contrast, the reference sample burns after the removal of the flame for more than 30 seconds, indicative of self-extinguishing property of the pristine polymer (original polymer).

The use of metal hydroxide type fillers such as Mg (OH)₂ or Al (OH)₃ typically give V0 rating in PP co-polymer at loading levels above 60%. However, by using Melamine-Silica as low as 2%, the flame retardant rating of naked polypropylene increased to V0 level. Moreover, very high loading of metal hydroxide induces a substantial reduction in the mechanical properties of the composite. The flame retardant composition of the present disclosure relatively improves the mechanical properties without compromising the flammability aspects.

### b) Process for preparing a flame retardant composition in solution form:

The method of making phosphorous-silica based flame retardant composition comprises mixing of phosphorous-based flame retardant filler and tetraethoxysilane (TEOS). First, a flame retardant solution was prepared in a 10 L reaction vessel, consisting of 120 g of Diethylphosphatoethyl triethoxysilane in a 6 L solvent, where the solvent was a mixture of ethanol and water at a volumetric ratio of 40:60. The solution was stirred for 1hr. In the next step, a metal oxide solution was prepared in a separate 5 L vessel, comprising 305 g of TEOS and 108 g of 3-aminopropyltriethoxysilane (APS). The metal oxide solution was also left for stirring for 30 min. Finally, the metal oxide solution was added to the flame retardant solution under vigorous stirring for 6 hours.

### Experimental study of the Flame retardant composition in solution form of the present disclosure on cotton fabric:

Cotton fabrics of different sizes were impregnated with the solution and the samples were left for 3 hours at room temperature. Finally, the wet fabrics were collected with 50 % wetness and dried at 120 °C for 3 hours. This impregnation step was prepared in several steps to attain different layers of silica coating and hence improve the flame retardant properties.

The flame retardant properties of the treated fabrics were evaluated by thermal gravimetric analysis (TGA). The thermal degradation of the cotton coated with silica was reduced drastically. The samples were stable up to 650 °C as compared to the pure cotton fabric which is stable up to 200 °C.

The method described herein provides a flame retardant composition in solution form, which can be exclusively used for making flame retardant fabrics.

### TECHNICAL ADVANCES AND ECONOMICAL SIGNIFICANCE

The flame retardant composition and process of the present disclosure described herein above has several technical advantages including, but not limited to, the realization of,
- composition having improved thermal resistance and flame retardant rating;
- a simple process;
- a scalable process; and
- economical and environment friendly process

The disclosure has been described with reference to the accompanying embodiments which do not limit the scope and ambit of the disclosure. The description provided is purely by way of example and illustration.

The embodiments herein and the various features and advantageous details thereof have been explained with reference to the non-limiting embodiments in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The foregoing description of the specific embodiments so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the disclosure to achieve one or more of the desired objects or results.

Any discussion of documents, acts, materials, devices, articles or the like that has been included in this specification is solely for the purpose of providing a context for the disclosure. It is not to be taken as an admission that any or all of these matters form a part of the prior art base or were common general knowledge in the field relevant to the disclosure as it existed anywhere before the priority date of this application.

The numerical values mentioned for the various physical parameters, dimensions or quantities are only approximations and it is envisaged that the values higher/lower than the numerical values assigned to the parameters, dimensions or quantities fall within the scope of the disclosure, unless there is a statement in the specification specific to the contrary.

While considerable emphasis has been placed herein on the components and component parts of the preferred embodiments, it will be appreciated that many embodiments can be made and that many changes can be made in the preferred embodiments without departing from the principles of the disclosure. These and other changes in the preferred embodiment as well as other embodiments of the disclosure will be apparent to those skilled in the art from the disclosure herein, whereby it is to be distinctly understood that the foregoing descriptive matter is to be interpreted merely as illustrative of the disclosure and not as a limitation.

## Claims

1. A flame retardant composition comprising:
a) at least one flame retardant filler; and
b) a porous substrate being **characterized by** porosity in the range of 30 % to 95 %, surface area in the range of 10 m²/g to 1500 m²/g, and tapped density in the range of 0.05 g/cm³ to 1.0 g/cm³, said porous substrate comprising: (i) at least one of a polyphenol and a flame retardant filler which is the same or is different from the flame retardant filler(s) in a); and (ii) a metal oxide precursor.

2. The flame retardant composition as claimed in claim 1, wherein said flame retardant filler is at least one selected from the group consisting of mineral flame retardant filler, phosphorus-based flame retardant filler, nitrogen-based flame retardant filler, silicone filler and combinations thereof.

3. The flame retardant composition as claimed in claim 1, wherein said flame retardant filler is at least one selected from the group consisting of ammonium polyphophates, melamine, melamine phosphate, potassium carbonate, magnesium carbonate, magnesium hydroxide, aluminum hydroxide, organophosphates, organophosphorous alkoxysilanes, antimony oxide, red phosphorous and clay.

4. The flame retardant composition as claimed in claim 1, wherein said polyphenol is at least one selected from the group consisting of proanthocyanidin, procyanidin, prodelphinidin, profisetinidin, tannic acid, theaflavin-3-gallate, ellagitannin, gallotannin, fucophlorethol and fucotriphlorethol.

5. The flame retardant composition as claimed in claim 1, wherein said polyphenol has a molecular weight greater than 500 g/mol.

6. The flame retardant composition as claimed in claim 1, wherein said metal oxide precursor comprises at least one of a coupling agent and an inorganic precursor, wherein said coupling agent is selected from the group consisting of alkoxysilanes, alkoxy titanates, and alkoxy zirconates.

7. The flame retardant composition as claimed in claim 6, wherein said coupling agent is selected from the group consisting of 3-aminopropyl triethoxysilane, 3-aminopropyl triethoxysilane and 3-mercaptopropyltriethoxysilane.

8. The flame retardant composition as claimed in claim 6, wherein said inorganic precursor is at least one of metal alkoxide of the general formula M(OR)ₓ, wherein M is a metal selected from the group consisting of Si, Al, Ti, Cu, Co, Zr, Fe, and Ni; R is an alkyl group having carbon atoms in the range of 1 to 20; and x is an integer in the range of 1 to 4; and
alkali metal metasilicates of the general formula N₂SiO₃, wherein N is a metal selected from the group consisting of Li, Na, and K.

9. The flame retardant composition as claimed in claim 8, wherein said metal alkoxide is selected from the group consisting of titanium isopropoxide and tetraethoxysilane; and said alkali metal metasilicates is sodium silicate.

10. The flame retardant composition as claimed in claim 1, wherein said flame retardant composition is in powder or solution form.

11. A process for preparing a flame retardant composition, said process comprising :
A. forming a porous substrate by a process comprising the following steps:
a) dissolving at least one of a polyphenol and a flame retardant filler in at least one fluid medium under stirring at a speed in the range of 100 rpm to 1000 rpm and at a temperature in the range of 0 °C to 50 °C, for a time period in the range of 2 hours to 8 hours to obtain a first solution;
b) mixing a metal oxide precursor with said first solution under stirring at a speed in the range of 100 rpm to 1000 rpm and at a temperature in the range of 5 °C to 50 °C for a time period in the range of 1 hour to 8 hours to obtain a second solution, wherein said metal oxide precursor comprises at least one of a coupling agent and an inorganic precursor;
c) maintaining said second solution under stirring for a time period in the range of 2 hours to 6 hours to obtain a precipitate comprising said porous substrate;
d) optionally separating said precipitate and washing it with water, followed by further washing with an acidic solution to obtain a washed precipitate; and
e) drying said precipitate to obtain a free flowing powder of the porous substrate.
B. dissolving said porous substrate with at least one solvent to obtain a solution;
C. adding to said solution, at least one flame retardant filler under stirring at a speed in the range of 400 rpm to 1000 rpm, at a temperature in the range of 5 °C to 150 °C, for a time period in the range of 1 hour to 24 hours to obtain a precipitate; and
D. separating said precipitate followed by washing and drying to obtain said flame retardant composition.

12. The process as claimed in claim 11, wherein said process optionally comprises adding to said first solution, at least one compound selected from the group consisting of hydrophobic agent, catalyst, surfactant, morphology controlling agent, pore expanding agent, inorganic salt, acidic compound and basic compound.

13. The process as claimed in claim 11, wherein said fluid medium is at least one selected from the group consisting of water, acetone, methanol, ethanol, isopropanol, butanol and combinations thereof.

14. The process as claimed in claim 11, wherein said solvent is at least one selected from the group consisting of non-polar solvents and polar solvents; wherein said polar solvent is selected from the group consisting of ethanol and methanol and said non-polar solvent is selected from the group consisting of toluene and n-hexane.

15. The process as claimed in claim 11, wherein the molar ratio of said metal oxide precursor and said polyphenol is in the range of 1:10 and 1:500.
